# EUROPÄISCHE PATENTSCHRIFT

(11) **EP 1 298 080 B1**
(45) Veröffentlichungstag und Bekanntmachung des Hinweises auf die Patenterteilung: **03.03.2004**
(21) Anmeldenummer: 02020276.8
(22) Anmeldetag: 11.09.2002
(51) Int. Cl.: B65G 49/06

(54) **Einrichtung zur Plattenübergabe von einem Plattenförderer auf ein Stapelgestell**
Device for transferring plates from a conveyor to a storage rack
Dispositif pour transférer des plattes entre un convoyeur et un rayon de stockage

(30) Priorität: 28.09.2001 DE 10148038
(43) Veröffentlichungstag der Anmeldung: 02.04.2003
(73) Patentinhaber: Grenzebach Maschinenbau GmbH, 86663 Asbach-Bäumenheim/Hamlar (DE)
(72) Erfinder: Pfeilschifter, Thomas, 86687 Kaisheim (DE); Lang, Edwin, 86641 Rain/Lech (DE)
(74) Vertreter: Gallo, Wolfgang, Dipl.-Ing. (FH)

(56) Entgegenhaltungen:
- EP-A- 1 101 743
- DE-B- 1 214 150
- JP-A- 2001 139 138
- JP-A- 2001 180 822

## Beschreibung

Die Erfindung betrifft eine Einrichtung zur Übergabe von Platten, und zwar insbesondere, jedoch nicht ausschließlich, von Glasplatten von einem Plattenförderer auf ein Stapelgestell oder dergleichen (siehe z.B. das Dokument JP-A-2001180822).

Bei der Flachglasherstellung wird ein flaches und sich kontinuierlich bewegendes Glasplattenband durch Aufbringen der Glasschmelze auf ein Flüssigmetallbad ausgebildet. Nach ausreichendem Abkühlen und Erstarren gelangt das Flachglasband zu Schneidestationen, wo das Glas zu Platten in den gewünschten Formaten geschnitten wird, und diese Glasplatten gelangen dann über Abförderer zu Stapelstationen, wo sie zum Weitertransport und zur weiteren Verarbeitung auf Stapelgestellen gestapelt werden.

Wenn die Glasplatten anschließend einer Beschichtung unterzogen werden sollen, um die optischen Eigenschaften wie beispielsweise Lichtdurchlässigkeit, Reflexionsverhalten oder optisches Erscheinungsbild, oder die Durchlässigkeit für Wärmestrahlung zu beeinflussen, wie das verbreitet bei Bauverglasungen gewünscht wird, soll die zu beschichtetende Glasseite möglichst frei von Verunreinigungen und Beeinträchtigungen aller Art gehalten werden. Man wählt dazu vorzugsweise die Luftseite des Flachglases (im Gegensatz zur Badseite, mit welcher das Glas beim Herstellungsvorgang auf dem Flüssigmetallbad schwimmt), die auch beim späteren Transport bis zur Stapelstation frei von mechanischen Einwirkungen ist, während die Badseite auf den Rollen des Plattenförderers läuft. An der Stapelstation wird nun allerdings die Glasplatte, um sie vom Plattenförderer abheben zu können, auf ihrer Luftseite mittels eines am Ende eines Roboterarms angeordneten Saugrahmens ergriffen, abgehoben und auf das Stapelgestell umgesetzt.

Aufgabe der Erfindung ist es, eine Einrichtung zur Plattenübergabe vom Bandförderer auf das Stapelgestell so auszubilden, dass möglichst keine Beeinträchtigung der Luftseite des Glases erfolgt.

Diese Aufgabe wird gemäß der Erfindung durch die im Anspruch 1 angegebene Anordnung gelöst. Vorteilhafte Ausgestaltungen der Erfindung sind Gegenstand der Unteransprüche.

Die erfindungsgemäße Übergabeeinrichtung ist also so ausgebildet, dass zum Abnehmen der Glasplatte vom Plattenförderer der Saugrahmen nicht mehr, wie bisher üblich, die Glasplatte an ihrer Luftseite ergreift, sondern von unten her an ihrer Badseite, so dass sichergestellt ist, dass auch beim Übergabevorgang die Luftseite der Glasplatte nicht beeinträchtigt oder verunreinigt wird.

Die erfindungsgemäße Einrichtung ist insbesondere für die Handhabung von Glasplatten konzipiert, kann jedoch auch zur Handhabung anderer Arten von Platten angewendet werden, wo ähnliche Bedürfnisse bestehen, beispielsweise zur Handhabung von oberseitig beschichteten, oberflächenvergüteten oder sonst mit hoher Oberflächenqualität ausgebildeten und empfindlichen Platten aus Metall, Kunststoff oder dergleichen.

Ein Ausführungsbeispiel der Erfindung wird nachstehend unter Bezugnahme auf die anliegendcn Zeichnungen mehr im einzelnen beschrieben. In den Zeichnungen zeigt:
- Fig. 1: in Seitenansicht eine Übergabeeinrichtung nach der Erfindung am Ende eines Plattenförderers in einer ersten Betriebstellung, und
- Fig. 2: eine ähnliche Ansicht der Einrichtung in einer zweiten Betriebstellung.

Gemäß den Zeichnungen weist die am Endbereich eines Plattenförderers 1 angeordnete Übergabeeinrichtung einen Roboter 2 mit einem Roboterarm 3 auf, der mit entsprechend vielen Freiheitsgraden ausgebildet ist und an seinem freien Ende einen Saugrahmen 4 trägt.

Der Plattenförderer ist im Bereich des Roboterarms 3 an der entsprechenden Seite mit einer Aussparung 5 ausgebildet, die das Eintauchen des Roboterarms 3 ermöglicht, und der Plattenförderer 1 mit allen zugehörigen Komponenten ist außerdem mit nicht in den Einzelheiten dargestellten Aussparungen ausgebildet, die ein Eintauchen des Saugrahmens ermöglichen.

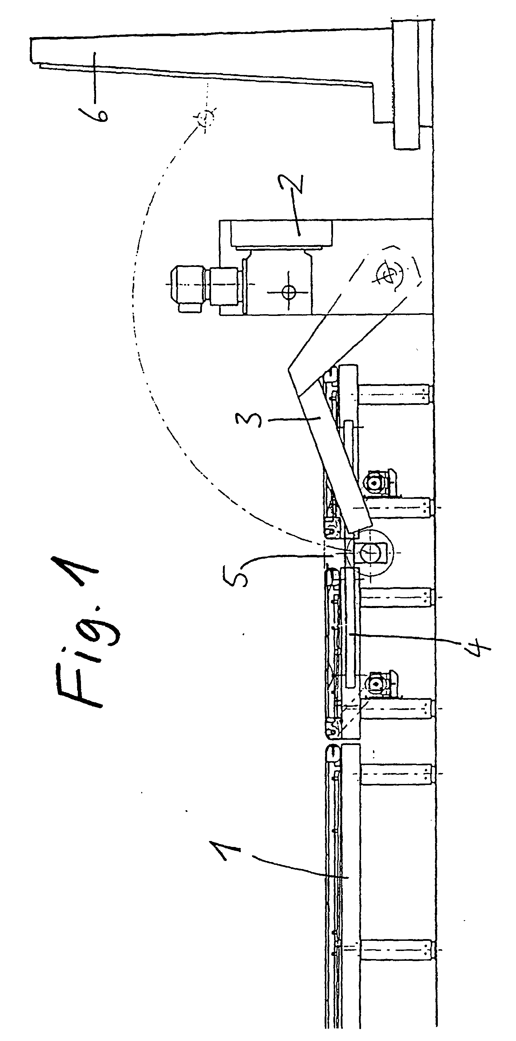

Figur 1 zeigt die Anordnung in der zur Aufnahme einer Glasplatte vom Plattenförderer bereiten Position des Roboters 2, 3, 4. In dieser Position ist der Saugrahmen 4 mit nach oben weisenden Saugern horizontal orientiert. Das ihn tragende Ende des Roboterarms 3 befindet sich in dieser Position also unter dem Saugrahmen 4. Der Endbereich des Roboterarms 3 mit dem daran angeordneten Saugrahmen 4 ist in dieser Position in die Aussparungen des Plattenförderers 1 eingetaucht. Eine herangeförderte Glasplatte läuft also auf dem Plattenförderer 1 über den eingetauchten Saugrahmen 4 bis in die Stopp-Position, in der sich die Platte etwa mittig über dem Saugrahmen befindet. Der Saugrahmen kann nun aus seiner eingetauchten Position mit seinen Saugern die Glasplatte an deren auf dem Plattenförderer aufliegenden Unterseite ergreifen, welche die Badseite aus der Glasherstellung darstellt, und dann kann der Roboter 2 den Roboterarm 3 aus der im Plattenförderer 1 eingetauchten Position herausbewegen, um die Glasplatte auf ein Stapelgestell 6 oder dergleichen zu übergeben.

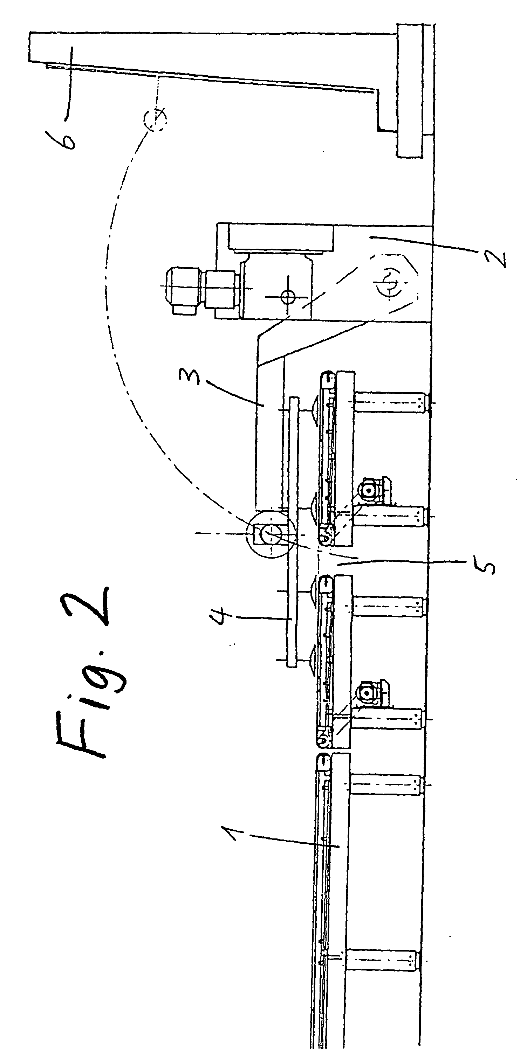

Figur 2 zeigt die Anordnung in einer zweiten Betriebstellung des Roboters, wobei der Roboterarm 3 mit dem Saugrahmen 4 nicht in die Aussparungen des Plattenförderers 1 eingetaucht ist, sondern in einer Stellung über dem Plattenförderer steht. Der Saugrahmen 4 ist dabei in eine Stellung geschwenkt, in welcher die Sauger nach unten zum Plattenförderer hin orientiert sind. Der Saugrahmen 4 kann also auch Glasplatten von deren Luftseite her aufnehmen. Die erfindungsgemäße Einrichtung ist also sowohl in der Betriebsart zum Aufnehmen der Glasplatten von deren Badseite her auf einer in dem Plattenförderer eingetauchtcn Stellung als auch zum Aufnehmen der Glasplatten von deren Luftseite her aus einer über dem Plattenförderer befindlichen Stellung wahlweise einsetzbar.

## Patentansprüche

1. Einrichtung zur Plattenübergabe von einem Plattenförderer (1) auf ein Stapelgestell (6) oder dergleichen, mit einem an einer Seite des Ptattenförderers angeordneten Roboter (2) mit einem Roboterarm (3), der an seinem freien Ende einen Saugrahmen (4) oder dergleichen zum Aufnehmen einer Platte vom Plattenförderer (1) trägt und mit einer für seine Bewegungsfunktion ausreichenden Anzahl von Freiheitsgraden ausgestattet ist, und wobei der Plattenförderer (1) an der entsprechenden Seite im Bereich des Roboterarms (3) mit einer Aussparung (5), in welche der Roboterarm (3) eintauchen kann, und mit ein Eintauchen auch des Saugrahmens (4) oder dergleichen ermöglichenden Aussparungen versehen ist, **dadurch gekennzeichnet, dass** der Saugrahmen (4) oder dergleichen am freien Ende des Roboterarms (3) schwenkbar ist sowohl in eine Position mit nach oben weisenden Saugern um aus der in die Aussparungen des Plattenförderers (1) eingetauchten Position eine Platte an ihrer dem Plattenförderer zugewandten Unterseite zu ergreifen, als auch in eine Stellung über dem Plattenförderer mit nach unten zum Plattenförderer orientierten Saugern zur Aufnahme der Platten von deren Oberseite her.

## Claims

1. Device for transferring plates from a plate conveyor (1) to a stacking rack (6) or the like, with a robot (2) with a robotic arm (3) arranged on one side of the plate conveyor, the robotic arm (3) carrying a suction frame (4) or the like at its free end to receive a plate from the plate conveyor (1) and being equipped with a number of degrees of freedom sufficient for its movement function, and wherein the plate conveyor (1) is provided at the corresponding side in the region of the robotic arm (3) with a recess (5) into which the robotic arm (3) can dip, and is also provided with recesses also allowing dipping of the suction frame (4) or the like, **characterised in that** the suction frame (4) or the like is pivotable at the free end of the robotic arm (3) both into a position with suction devices pointing upwards in order to grasp a plate at its lower side facing the plate conveyor from the dipped position into the recesses of the plate conveyor (1), and also into a position above the plate conveyor with suction devices oriented downwards toward the plate conveyor for receiving the plates from their upper side.

## Revendications

1. Dispositif de transfert de plaques d'un convoyeur (1) de plaques sur un rayon de stockage (6) ou un élément analogue, comprenant un robot (2) placé sur un côté du convoyeur de plaques et muni d'un bras de robot (3) qui, à son extrémité libre, porte un cadre à ventouses (4) ou un élément analogue, destiné à prélever une plaque du convoyeur (1) de plaques, et est pourvu d'un nombre suffisant de degrés de liberté pour effectuer ses fonctions de mouvement, le convoyeur (1) de plaques étant pourvu, sur le côté correspondant, dans la région du bras de robot (3), d'un espace libre (5) dans lequel le bras de robot (3) peut descendre, et étant pourvu d'espaces libres pour permettre également la descente du cadre à ventouses (4) ou d'un élément analogue, **caractérisé par le fait que** le cadre à ventouses (4) ou un élément analogue, situé à l'extrémité libre du bras de robot (3), peut être pivoté aussi bien dans une position dans laquelle les ventouses sont orientées vers le haut, afin de saisir une plaque sur sa face inférieure tournée vers le convoyeur de plaques, à partir de la position abaissée dans les espaces libres du convoyeur (1) de plaques, que dans une position se trouvant au-dessus du convoyeur de plaques, dans laquelle les ventouses sont orientées vers le bas, en direction dudit convoyeur, en vue de saisir les plaques depuis leur face supérieure.
